Europäisches Patentamt

European Patent Office

Office européen des brevets

(19)

(11) Veröffentlichungsnummer: **0 299 197**
**A2**

## (12) EUROPÄISCHE PATENTANMELDUNG

(21) Anmeldenummer: 88109102.9

(22) Anmeldetag: 08.06.88

(51) Int. Cl.⁴: **B03C 3/00 , B03C 3/45 , B03C 3/51 , //F01N3/02**

(30) Priorität: 16.07.87 DE 3723544

(43) Veröffentlichungstag der Anmeldung:
**18.01.89 Patentblatt 89/03**

(84) Benannte Vertragsstaaten:
**AT CH DE ES FR GB IT LI NL SE**

(71) Anmelder: **MAN Technologie GmbH**
**Dachauer Strasse 667 Postfach 50 04 26**
**D-8000 München 50(DE)**

(72) Erfinder: **Reichle, Ernst-Michael, Dr.**
**Dipl.-Phys.**
**Sanddornweg 22**
**D-8047 Karlsfeld(DE)**
Erfinder: **Seel, Matthias**
**Trappentreustrasse 29**
**D-8000 München 2(DE)**

(54) Elektrostatischer Filter zum Reinigen von Gasen.

(57) Es wird ein elektrostatischer Partikelfilter beschrieben, bei dem zum sicheren Heraustrennen der
Partikel (12) aus den Gasen (10) die Abscheideelektrode (13) strukturiert ausgebildet wird,
derart, daß eine Vielzahl von Windschattengebieten
bildende Räume (15) geformt werden, in denen die
elektrostatisch angezogenen Partikel eingefangen
werden können, ohne vom Hauptstrom wieder mitgerissen zu werden. Eine starke Koronaentladung
erlaubt die gleichzeitige Oxidation von brennbaren
Partikeln bei sauerstoffhaltigen Gasen.

EP 0 299 197 A2

Fig.1

Die Erfindung bezieht sich auf einen elektrostatischen Filter zum Reinigen von Gasen mit in einem Gehäuse angeordneten Elektroden, durch dessen elektrisches Feld das Gas durchleitbar ist und dabei die Partikel aus dem Gas herausgetrennt werden können.

Elektrostatische Filter haben gegenüber Filtern mit Tiefenwirkung aus porösen Materialien oder Drahtgestricken den Vorteil, daß der Gasdurchgang durch den ersteren Filter immer offen bleibt und insbesondere bei der Verwendung des Filters zur Reinigung von Abgasen von Verbrennungsmaschinen kein den Motor beeinträchtigender Gegendruck erzeugt wird. Der Gasstrom wird durch ein mittels einem Elektrodenpaar erzeugtes elektrisches Feld geführt, wo die im Gas enthaltenen Partikel aufgeladen und zu einer Abscheideelektrode transportiert werden. An der Abscheideelektrode geben die Partikel ihre Ladung jedoch wieder ab, verlieren dadurch ihre Haftkräfte und gelangen in den Gasstrom zurück. Es wurde deshalb angeregt, die Partikel mit Hilfe von Elektroden mit besonderen Fangeigenschaften abzuscheiden (Zeitschrift, (Staub-Reinhalt. Luft 29 (1969) Nr. 8, August, Seiten 318, 319).

Ein elektrostatischer Filter mit einer Elektrode mit Fangeigenschaften für Brennkraftmaschinen ist aus der DE 30 19 991A bekannt. Danach ist eine rohrförmige, aus gelochtem Blech hergestellte Abscheideelektrode konzentrisch um eine Stabelektrode angeordnet. Die Abgase werden durch das Rohr geführt, wobei die an die Abscheideelektrode transportierten Partikel mit einem Teilstrom der Abgase durch die Öffnungen des gelochten Bleches in einen äußeren Ringraum mitgerissen werden. Die Partikel werden schließlich mit diesem Teilstrom in die Verbrennungsmaschine zurückgeführt. Hierdurch werden die Partikel eingefangen und es wird verhindert, daß sie nach ihrer Entladung an der Niederschlagselektrode wieder von dem Hauptabgasstrom mitgerissen werden. Diese Lösung ist insofern problematisch, als die Rückführung von Rußpartikel in den Verbrennungsmotor nicht ohne zusätzliche, komplizierte Maßnahmen möglich ist, mit denen vermieden wird, daß Rostpartikel und anderweitige Verschmutzungen aus den Abgasrohren mit in die Verbrennungsmaschine gelangen.

Der Erfindung liegt die Aufgabe zugrunde, einen elektrostatischen Filter zu schaffen, mit dem die Partikel in einer fertigungstechnisch einfachen Art aus Gasen heraustrennbar sind.

Die Aufgabe wird erfindungsgemäß durch die im Anspruch 1 gekennzeichneten Merkmale gelöst.

Hierdurch werden die Partikel in einer sehr einfachen Art, und zwar mechanisch in Poren, Spalten etc. der strukturierten Abscheideelektrode eingefangen und damit dem Gasstrom entzogen. Durch Einwirkung von Wärme beispielsweise können die festgehaltenen Partikel verbrannt und damit vernichtet werden. Durch die Strukturierung wird die als Niederschlagfläche dienende Oberfläche vergrößert unter gleichzeitiger Bildung von vielen kleinen Windschattengebieten, in denen die Partikel haften bleiben. Unter Abscheideelektroden werden auch die Ausführungen verstanden, bei denen die eigentliche Elektrode mit einer strukturierten Komponente kombiniert wird. Die Niederschlagfläche erstreckt sich dabei auch auf die strukturierte Komponente.

Es ist vorteilhaft, wenn die erfindungsgemäße Abscheideelektrode zumindest einen Teil der Abgasführung innerhalb des Filters bildet, um im Randgebiet des Gasstromes zum Liegen zu kommen und ein möglichst großes Volumen zu erhalten.

Gemäß einer Ausgestaltung der Erfindung besteht die Abscheideelektrode aus Metallwolle. In der Metallwolle werden sich die angezogenen Partikel absetzen. Über die Dichte der Metallwolle kann Einfluß auf das Einfangvermögen der Abscheideelektrode genommen werden. Drahtgestricke, gelochte Blechpakete, Metallschaum sind auch geeignete Strukturen zur Bildung einer Partikelauffang-Abscheideelektrode.

Eine weitere Ausgestaltung besteht in einer Struktur, beispielsweise in der Form einer Spirale, die quer zur Gasströmungsrichtung (Abscheiderichtung) durchlässig und in Strömungsrichtung undurchlässig für Partikel ist. Eine derartige Struktur kann vorzugsweise aus in Gasströmungsrichtung mit Abstand nebeneinander angeordneten Blechringen bestehen, die gleichzeitig im Filter die Gasführung bilden. Die Blechringe können in einer vorteilhaften Weise eine Spirale bilden, die an die Innenwandung eines rohrförmigen Filtergehäuses angelehnt ist. Diese Ausgestaltung hat den Vorteil, daß die Spirale oder das Ringpaket auch eine Falle aus einem nicht elektrisch leitenden Material bilden kann, innerhalb der die eigentliche Elektrode in der Form eines Drahtes oder einer Drahtspirale durchgezogen ist. In dieser Ausführung läßt sich die Drahtspirale gleichzeitig als Heizquelle für die Verbrennung der Partikel nutzen, indem sie beispielsweise als Heizdraht ausgelegt wird. Die Partikel werden annähernd radial zur Drahtelektrode transportiert, durch die Falle in ihrer Beweglichkeit in axialer Richtung gehindert und durch die Erhitzung verbrannt.

Die Partikelfalle kann gemäß einer weiteren Ausgestaltung der Erfindung in einem Netz, Wolle oder dergleichen aus Metall, Keramik oder einem anderen Material bestehen, die der Abscheideelektrode an der der Strömung zugekehrten Seite zugeordnet ist. Hierbei verfangen sich die Partikel bereits im Netz bzw. der Wolle, bevor sie sich an der Abscheideelektrode niederschlagen.

Bei der Anwendung eines elektrisch nicht leitenden Materials für die Falle behalten die Partikel weitgehend ihre Ladung, so daß die Anziehungskraft zwischen Elektrode und Partikel aufrechterhalten bleibt und damit die Fangeigenschaften verstärkt werden.

Die Partikel lassen sich unabhängig von der speziellen Ausführung der Abscheideelektrode innerhalb dieser verbrennen, wenn es zweckmäßig ist. Dieses ist beispielsweise der Fall, wenn der Filter zur Reinigung von Abgasen dient. Hierbei werden die eingefangenen Partikel innerhalb der Abscheideelektrode durch die heißen Abgase und gegebenenfalls unterstützt durch katalytisch wirkende Beschichtungen an der Abscheideelektrode und/oder Heizelemente verbrannt. Als Heizquelle dient vorzugsweise ein Heizdraht, der durch die Abscheideelektrode geführt ist. Brenner oder elektrische Heizkörper sind auch für den Abbrand der Partikel denkbar. Die Heizquelle kann auch periodisch oder nach Bedarf eingeschaltet werden, so daß sich die Partikel zwischenzeitlich akkumulieren. Bei der Verwendung der Filter für Abgase ist gegebenenfalls lediglich die Zufuhr einer Zusatzwärmeenergie erforderlich. Um die Heiztemperatur möglichst niedrig halten zu können, wird vorgeschlagen, die Heizperioden in die Vollastbetriebszeiten zu legen, da hier die Abgastemperatur bereits relativ hoch ist.

Die Fangeigenschaften können gemäß einer weiteren Ausgestaltung der Erfindung auch dadurch verbessert werden, daß die Abscheideelektrode im Filtergehäuse so angeordnet wird, daß ein Teilstrom der zu reinigenden Gase durch die Abscheideelektrode führbar ist.

Dieser Teilstrom kann vorzugsweise nach Durchströmen der Abscheideelektrode wieder in den Hauptstrom zurückgeführt werden. Damit entfallen zusätzliche Strömungskanäle für die Beseitigung des Teilgasstromes. Dieses geschieht entweder direkt am Ende der Abscheideelektrode innerhalb des Filtergehäuses oder über einen getrennten Raum, der mit dem Ausgang für das gereinigte Gas in Verbindung steht.

Bei sauerstoffhaltigen Gasen mit brennbaren Partikeln, wie z. B. die Abgase von Feuerungsanlagen, Dieselmotoren, wird die Aufgabe gemäß Anspruch 22 auch dadurch gelöst, daß mittels einer starken Koronaentladung der Sauerstoff ionisiert wird, während die Partikel in der Umgebung der Abscheideelektrode gesammelt und von den im elektrischen Feld beschleunigten reaktiven Ionen verbrannt werden. Der Filter erfüllt damit vielmehr die Funktion eines Reaktors anstelle die eines Filters, da die Partikel nicht aus dem Gas herausgetrennt, sondern direkt vernichtet werden. Die erforderliche Wärmeenergie wird entweder mit den Gasen eingeführt, wie z. B. im Fall der Abgase, oder über gesonderte Heizquellen zugeführt.

Diese Lösung ist besonders für den Einsatz in Kraftfahrzeuge mit Dieselmotoren geeignet, womit eine Abgasreinigung geschaffen ist, die nur einen Reaktor-Filter ohne zusätzliche Heizquelle benötigt und wobei außerdem Vorrichtungen und Maßnahmen zur Entsorgung oder zur Reinigung des Filters entfallen.

Zur Verlängerung der Verweildauer der Partikel im elektrischen Feld können in der Umgebung der Abscheideelektrode Partikelfallen vorgesehen oder die Abscheideelektrode direkt als Partikelfalle ausgebildet sein. Dazu sind beispielsweise Ausführungen geeignet, wie sie im Zusammenhang mit den Ansprüchen 1 bis 20 beschrieben sind.

Zur Bildung der starken Koronaentladung werden vorzugsweise ein oder mehrere dünne Drähte verwendet, deren Durchmesser jeweils kleiner als 0,15 mm ist, um die Abscheidung von Partikeln auf der Sprühelektrode zu verhindern.

Der Koronastrom wird gemäß einer weiteren Ausgestaltung der Erfindung durch entlang des Elektrodendrahtes vorgesehenen Nadeln, Spitzen oder Whisker vergrößert, die im Gasphasen-Abscheidungsprozeß hergestellt werden. Es ist auch die Anbringung von kurzen dünnen Drahtabschnitten denkbar, so daß die Elektrode eine flaschenbürstenähnliche Konstruktion aus feinstem Metalldraht hat.

Die starke Koronaentladung kann auch in Kombination mit den Ausführungsformen mit strukturierten Abscheideelektroden nur zeitweise eingeschaltet werden. In diesem Fall arbeitet die Anlage im Regelfall als ektrostatischer Filter, und mit der Zuschaltung eines höheren Potentials werden die Partikel bei Bedarf oxidiert. Die hohe Koronaentladung mit ihrer sauerstoffionisierenden Wirkung stellt somit eine Alternative zu den Zusatzheizquellen dar.

Die Erfindung wird anhand von in der Zeichnung schematisch dargestellten Ausführungsbeispielen näher erläutert.

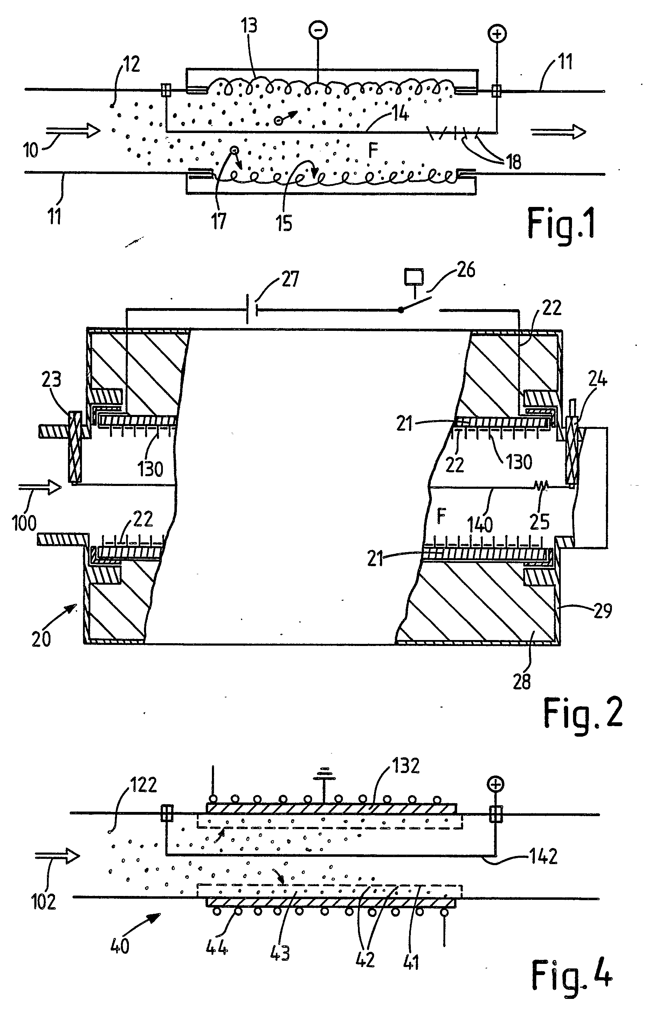

Fig. 1 - 6 zeigen je ein Ausführungsbeispiel.

An Hand der Fig. 1 sollen zunächst die Prinzipien der erfindungsgemäßen Lösungen beschrieben werden. Die zu reinigenden Gase 10 werden durch ein Führungsrohr 11 ins Freie oder in eine nicht dargestellte Anlage geleitet. Um die in dem Gas 10 enthaltenen Partikel 12 vom Gas 10 zu trennen, wird es in einem Abschnitt der Gasführung 11 durch ein elektrisches Feld F geführt, das mittels einem Elektrodenpaar 13, 14, erzeugt wird. Mindestens eine Elektrode ist mit einer gewissen Rauhigkeit, Porosität oder als lockere Drahtstruktur ausgebildet, derart, daß sich darin die Partikel verfangen können. Beim Durchströmen des Gases 10 durch das elektrische Feld F werden die Partikel 12 elektrisch geladen und von den Elektroden 13, 14, angezogen. Bei der porösen Struktur der einen Elektrode 13 verfangen sich die angezogenen Partikel 12 innerhalb dieser Struktur und werden damit vom Gasstrom 10 getrennt. Die poröse Struktur der einen Elektrode 13 bildet gewissermaßen eine Vielzahl von kleinen offenen Kammern 15, die Windschattengebiete bilden, in denen die Partikel 12 auch nach ihrer Entladung beim Kontakt mit der Elektrode gegen den Hauptstrom 10 geschützt und somit nicht mitgerissen werden.

Das Ziel dieser Ausführung liegt darin, einerseits den Querschnitt für die Gasführung 11 nicht durch ein Filterelement einschränken zu müssen und andererseits die Partikel aus dem unveränderten Strom "abzusaugen", was durch die strukturierte Elektrode 13 in Verbindung mit dem elektrischen Feld F erreicht wird. Dabei können eine oder mehrere Elektroden als Abscheideelektroden in strukturierter Ausführung ausgebildet sein. Es kommt nicht darauf an, ob die strukturierte Abscheideelektrode makroskopisch gesehen plattenförmig, rohrförmig oder mit anderer Formgebung ausgebildet ist. Wesentlich ist, daß sie stark strukturiert und in Kontakt mit dem Gasstrom angeordnet ist. Dabei kann die Abscheideelektrode auch aus zwei Komponenten gebildet sein, nämlich einer platten- oder rohrförmigen oder als Draht ausgebildeten Elektrode in Verbindung mit einer porösen Struktur, die in Richtung des Partikeltransportes vor der Elektrode angeordnet ist. Eine derartige Abscheideelektrode erfüllt gleichermaßen den Fangeffekt.

Eine zweite Ausführungsform nach der Erfindung besteht in einem mittels eines inhomogenen, elektrischen Feldes arbeitenden Reaktors, mit dem Partikel und Gasbestandteile umgewandelt werden. Der Aufbau des Reaktors ist im Prinzip mit dem des oben beschriebenen elektrostatischen Filters vergleichbar. Der Reaktor oder Reaktor-Filter beruht auf einer auf ein sehr hohes Potential. 16 angelegten Sprühelektrode 14, derart, daß die Koronaentladung so stark ist, daß aus Sauerstoff Sauerstoff- und/oder Ozonione 17 gebildet werden können. Diese werden im elektrischen Feld beschleunigt und beim Auftreffen auf Partikel 12 können sie aufgrund ihrer hohen Reaktivität brennbare Partikel oxidieren. Der Reaktor-Filter ist somit für solche Anwendungen geeignet, bei denen brennbare Partikel aus einem Gas zu trennen sind. Der für den Reaktionsprozeß erforderliche Sauerstoff wird dem Gas gesondert zugeführt (z. B. Luft), sofern er nicht im zu reinigenden Gasstrom bereits enthalten ist. Dieser Filter bzw. Reaktor ist insbesondere für Fahrzeuge zur Reinigung von Dieselabgasen geeignet, zumal die Abgase Restsauerstoff sowie brennbare Partikel, nämlich Rußpartikel, enthalten und dazu auch noch die für die Reaktion erforderliche höhere Temperatur aufweisen. Die Sprühelektrode 14 wird aus mindestens einem sehr dünnen Draht hergestellt, auf den sich keine Partikel 12 abscheiden können. Zur Erhöhung des Koronastromes ist der Draht 14, wie auf der rechten Hälfte in Fig. 1 dargestellt, mit noch feineren Querdrahtabschnitten 18 versehen, die auch andere Spitzen sein können.

Bei der Ausführung des Reaktor-Filters ist für eine entsprechende Maßnahme zu sorgen, mit der die Verweildauer der Partikel im elektrischen Feld so gehalten wird, wie es für die gewünschte Verbrennung der Partikel erforderlich ist. Die notwendige Verweilzeit, die empirisch ermittelt wird, und die Maßnahmen zu deren Verlängerung richten sich nach dem jeweiligen Anwendungsfall. In manchen Fällen wird es möglich sein, den Gasdurchsatz durch den Reaktor-Filter entsprechend klein zu halten. In den vorwiegenden Fällen jedoch ist diese Maßnahme nicht möglich oder zumindest unwirtschaftlich. Hier sind bauliche Maßnahmen zweckmäßig, mit denen die Partikel zurückgehalten werden, wie z. B. mit einem strukturierten Aufbau der Abscheideelektrode, wie sie nachfolgend in Verbindung mit der ersten Ausführungsform der Erfindung beschrieben werden.

Die Ausgestaltung einer strukturierten Abscheideelektrode ist vielseitig. Fig. 2 zeigt ein Beispiel, bei dem ein zylindrischer Partikelfilter 20 vorgesehen ist, der eine axial angeordnete Koronaelektrode 140 und eine makroskopisch gesehen rohrförmige Abscheideelektrode 130 mit Spiralstruktur aufweist, die den Strömungsweg 100 innerhalb des Filters 20 begrenzt. Die Spiralstruktur der Abscheideelektrode 130 kann durch ein breites Metallband gebildet und spiralförmig an die Innenwand eines Rohres 21, das z. B. aus Keramik sein kann, angelegt sein. Die Abscheideelektrode 130 ist mit einer Heizspirale 22 spiralförmig durchsetzt. Die Koronaelektrode 140 ist über Isolatoren 23 und 24 am Filtergehäuse verankert und wird mittels einer Feder 25 straff gehalten.

In Betrieb des Filters 20 wird die Sprühelektrode 140 über einen Anschluß 11 an eine Hochspannung angelegt und die Heizspirale 22 an eine Stromquelle 27 angeschlossen. Die Heizspirale 22 kann kontinuierlich in Betrieb sein oder über einen regelbaren Schalter 26 bei Bedarf oder periodisch eingeschaltet werden. Wenn der partikelbeladene Gasstrom 100 das elektrische Feld F durchströmt, scheiden sich die Partikel an der Spiralstruktur 130 ab und werden dort durch die Heizspirale 22 verbrannt. Die Koronaelektrode 140 wird aus einem so dünnen Draht hergestellt, daß sich daran keine Partikel abscheiden können. Eine Wärmeisolierung 28 füllt den Raum zwischen dem Halterohr 21 für die Abscheideelektrode und dem Filtergehäuse aus.

In einer Variante dazu kann die Spiralstruktur 130 Teil des Rohres 21 sein, während die Heizspirale 22 gleichzeitig die eigentliche Elektrode bildet. Ein Keramikrohr 21 mit tiefen, spiralartig verlaufenden Nuten könnte so eine Struktur bilden, indem die Nutwände 130 die Spiralstruktur darstellen und wobei die Elektroden-Heizspirale 22 in den Nuten angeordnet ist.

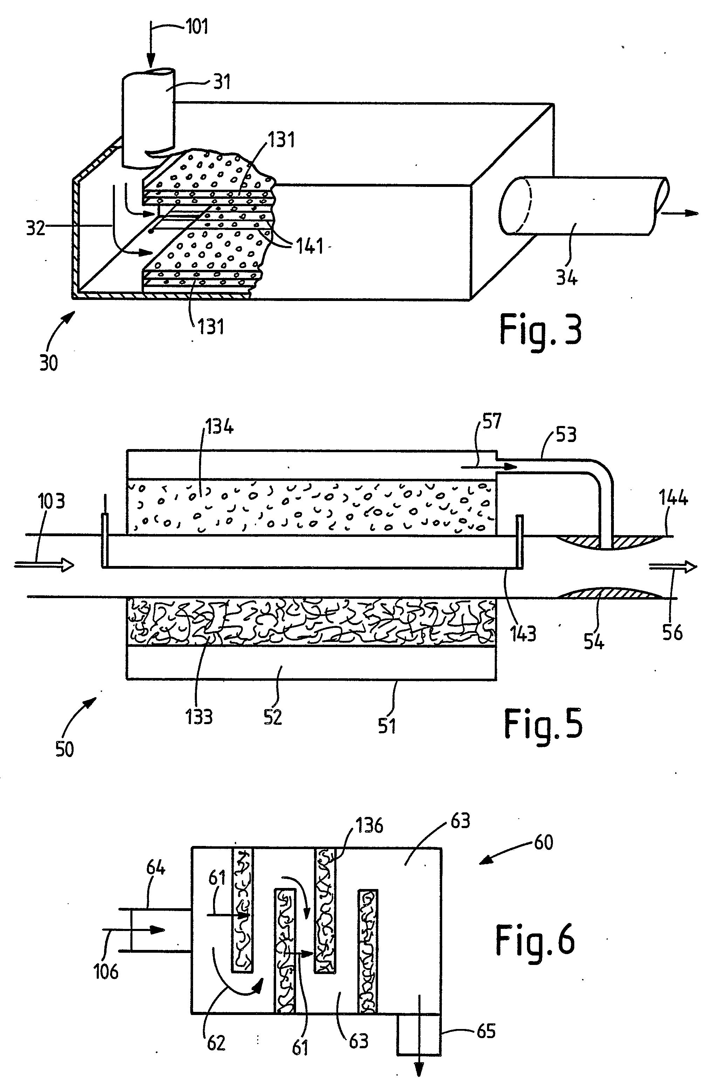

In Fig. 3 ist eine Ausführung mit plattenförmigen Abscheideelektroden dargestellt, die aus Lochblech-Paketen bestehen. In der Mitte des Filters 30 ist eine aus mehreren Drähten 141 bestehende erste Elektrode angeordnet. Das über einen Stutzen 31 in den Filter 30 eintretende Gas 101 wird zwischen den Abscheideelektroden 131 geführt, wobei die Partikel zu den Abscheideelektroden 131 transportiert und innerhalb der Blechpakete eingefangen werden. Die gereinigten Gase strömen über einen zweiten Stutzen 34 aus dem Filter heraus.

Die Lochbleche einer jeweiligen Abscheideelektrode 131 sind nach der Ausführung gemäß Fig. 3 in elektrisch leitender Verbindung, so daß sie alle die gleiche Wirkung auf die Partikel ausüben. Eine Differenzierung kann mechanisch durch unterschiedliche Lochdichte oder unterschiedliches Verhältnis zwischen Lochfläche zu Blechfläche erreicht werden, um das Fangvermögen der Elektroden zu verbessern. Eine Variante besteht darin, das jeweils dem Gasstrom angrenzende Lochblech mit einer höheren Lochdichte bzw. einem wesentlich größerem Verhältnis zwischen Lochfläche und Blechfläche auszulegen, um eine Abscheidung an diesen Blechen gering zu halten, zumal daran abgeschiedene Partikel vom Gasstrom leicht wieder mitgerissen werden können. Eine ähnliche Wirkung wird mit einer von Platte zu Platte ansteigenden Spannung erreicht, die den elektrischen Saugeffekt in das Blechpaketinnere verstärkt.

Eine weitere Möglichkeit ist, wenn die die Strömung angrenzenden Lochplatten nicht an die Spannung angelegt, sondern über elektrisch isolierende Verbindungen (nicht dargestellt) mit den eigentlichen (äußeren) Elektrodenplatten verbunden werden. Auf diese Weisung übernehmen die die Strömung angrenzenden Lochplatten gegenüber dem Gasstrom 32 eine Abschirmfunktion, wobei sie verhindern, daß der vorbeistreifende Gasstrom 32 an die dahinter auf den Elektroden abgeschiedene Partikel gelangt. In diesem Fall können die an die Strömung angrenzenden Lochplatten aus nicht elektrisch leitendem Material bestehen. Die äußere Platte der jeweiligen Abscheideelektrode 131 kann auch ungelocht sein.

In Fig. 4 ist eine weitere Ausführung gezeigt, bei der im Filterbereich 40 eine rohrförmige Abscheideelektrode vorgesehen ist, die eine eigentliche Elektrode 132 mit glatter oder gewellter oder leicht strukturierter Oberfläche sowie ein Drahtnetz 41 aufweist, das als Partikelfalle im gewissen Abstand abgasseitig der Elektrode 132 vorgelegt ist.

Die Partikel 122 aus dem Gasstrom 102 dringen aufgrund der von der Elektrode 132 ausgeübten Anziehungskraft durch die Poren 42 des Drahtnetzes 41 hindurch und kommen dabei in den Windschattenbereich 43 zwischen dem Drahtnetz 41 und der Elektrode 132. Mit dem vorgelagerten Drahtnetz 41 wird somit verhindert, daß die an der Elektrode 132 sich niederschlagenden Partikel 122 vom Gasstrom 102 wieder mitgerissen werden. Drahtnetz 41 und Elektrode 132 können auf gleichem elektrischen Potential liegen. Es kann jedoch auch eine Spannungsdifferenz angelegt werden, so daß die Partikel zusätzlich zur Elektrode hin beschleunigt werden.

Weitere mögliche Ausführungen für strukturierte Abscheideelektroden sind Metallwollgeflechte 133 oder Metallschaum 134 (siehe Fig. 5).

Die Ausgestaltungsmöglichkeiten sowohl hinsichtlich der Struktur als auch der Geometrie bzw. Formgebung der Abscheideelektroden sind vielseitig. So können die Abscheideelektroden unabhängig von ihrer Struktur rohrförmig oder plattenförmig sein oder auch andere für den jeweiligen Anwendungsfall zweckmäßige Formen haben. Bei Ausführungen mit Partikelfallen wird das Material für die Partikelfalle nach wirtschaftlichen und anwendungsspezifischen Gesichtspunkten ausgewählt. Bei kalten Gasen sind Kunststoffe, Textilien und dergleichen möglich, während bei heißen Gasen temperaturbeständige Materialien, wie Metall, Keramik usw., verwendet werden müssen.

In heißen Gasen, wie z. B. Abgasen von Verbrennungsmaschinen, sind vorwiegend brennbare Partikel enthalten. Derartige Partikel werden im allgemeinen nach ihrer Trennung vom Gas vorzugsweise verbrannt, wozu die Wärme aus den Gasen mitgenutzt wird. Dieser Prozeß kann durch Beschichten der Abscheideelektroden mit einer katalytisch wirkenden Schicht unterstützt werden. Die katalytische Beschichtung kann je nach Katalysator die Verbrennung der Rußpartikel direkt (Nichtedelmetall-Oxide) oder indirekt (Edelmetalle) induzieren. Bei einer Edelmetallbeschichtung (z. B. Platin) läuft der Prozeß über die Oxidation der Kohlenwasserstoffe und das Kohlenmonoxid. Die gasförmigen Schadstoffe des Abgases werden somit gleichzeitig reduziert. Mit den die Abscheideelektroden durchsetzenden Heizdrähten läßt sich die Temperatur auf den erforderlichen Wert anheben. Im Fall der rohrförmigen Abscheideelektrode 132 nach Fig. 4 erfolgt das Aufheizen mit Hilfe des Heizdrahtes 44, der spiralförmig durch die Abscheideelektrode 132 gezogen ist.

In der Regel wird ein Teilstrom aus dem zu reinigenden Gas in die strukturierte Abscheideelektrode hineinströmen, um in Strömungsrichtung am Ende des Filters wieder in den Hauptstrom einzufließen. Dieser Teilstrom trägt dazu bei, die angezogenen Partikel in die Poren bzw. Hohlräume der Elektrodenstruktur hinein zu befördern. Dieser Effekt kann dadurch verstärkt werden, daß der Teilstrom zum Beispiel bei einer rohrförmigen Abscheideelektrode radial abgezogen und abgeführt wird. In Fig. 5 ist beispielsweise dazu zwischen der Abscheideelektrode 133 bzw. 134 und der Außenwand 51 des Filtergehäuses 50 ein Zwischenraum 52 vorgesehen, der über ein Verbindungsrohr 53 mit dem Hauptstrom-Abführrohr 144 in Strömungsrichtung nach dem Filter 50 verbunden ist. Um eine Saugwirkung über das Verbindungsrohr 53 zu erreichen, kann das Abführrohr 144 an der Mündungsstelle der Verbindungsstelle venturiartig eingeschnürt sein (Ziffer 54).

Sämtliche vorstehend beschriebenen Ausführungen können als Reaktorfilter ausgeführt werden, indem die jeweilige Sprühelektrode 14, 140, 141 bzw. 142 an ein ausreichend starkes Potential angelegt wird. Eine zusätzliche Heizquelle entfällt in den Anwendungsfällen, in denen ausreichend heiße Gase durch das elektrische Feld geführt werden. Durch entsprechende katalytische Beschichtungen kann die chemische Reaktion sowohl quantitativ als auch qualitativ beeinflußt werden.

Gemäß einer weiteren Ausführungsform der Erfindung besteht der Filter aus mindestens einer Partikelfalle, die so im Filtergehäuse angeordnet ist, daß sie vom zu reinigenden Gasstrom im wesentlichen nur gestreift wird, wobei ein geringerer Teil der Gase die Partikelfalle durchspült. Die Partikelfalle besteht aus einer porösen Struktur wie Wolle, Faser- oder Drahtgestrick, Lochplatten, Schaumkörper oder Kombinationen aus diesen Ausgestaltungen, in deren Poren sich die Partikel aus den Gasen ablagern. Die Partikel werden entweder beim Durchströmen der Teilströme durch die Partikelfalle oder durch Gaspulsationen oder deren Kombination in die Partikelfalle herangetragen.

Damit ist ein mechanischer Filter geschaffen, bei dem die Gase gereinigt werden, aber stets einen freien Durchfluß haben und nicht durch etwa einen beladenen Filter behindert werden. Durch Auslegung der Partikelfalle kann der Grad der Filterwirkung bestimmt werden. Das heißt, der Grad der Porosität, die Länge der Partikelfalle, die vom Gasstrom gestreift wird, sowie die Anordnung der Partikelfalle im Gasstrom beeinflussen im wesentlichen die Filterwirkung, wobei die Werte empirisch für den jeweiligen Anwendungsfall ermittelt werden.

Gemäß einer Ausgestaltung dieser erfindungsgemäßen Ausführung sind mehrere in Gasströmungsrichtung hintereinander angeordnete Partikelfallen vorgesehen, wobei im Bereich jeder Partikelfalle der Gasstrom geteilt wird, in einen Teilgasstrom, der in die Partikelfalle ein- oder hindurchgeführt wird und einen Teilgasstrom, der an der Partikelfalle vorbeigeführt wird, wobei die Teilgasströme im Bereich oder nach der Partikelfalle wieder vereinigt werden.

Durch Gaspulsationen können jeweils geringe Gasmengen lokal in die Partikelfalle hinein und wieder heraus in den Hauptgasstrom geführt werden, wobei die Partikel beim Heraustreten des Gases von der Partikelfalle zurückgehalten werden. Dieses erfolgt am ganzen der Gasströmung zugewandten Filterbereich und entlang des Strömungsweges innerhalb des Filters. Der Filter bzw. die Partikelfalle bzw. -fallen werden dabei etwa gleichmäßig mit Partikel beladen.

Bei nicht vorhandenen Gaspulsationen oder Turbulenzen können geringere Teilströme durch die Partikelfalle geführt und nach einer Durchströmungsstrecke wieder mit dem Hauptstrom vereinigt werden.

Bei Anwendungsfällen, in denen das Gas nicht in pulsierender Form strömt oder die Gasschwingungen zu gering sind, wie beispielsweise bei Feuerungsanlagen, können Mittel eingesetzt werden, wie Resonatoren und dergleichen, um im Gas Druckwellen anzuregen.

Dieser mit Partikelfallen ausgestattete Filter hat gegenüber den elektrostatischen Filtern den Vorteil, daß dieser zur Filterung auch von nicht elektrisch beladbaren Partikeln verwendet werden kann. Filter dieser Art eigenen sich insbesondere zur Reinigung von Abgasen von Verbrennungsmaschinen, bei denen die Abgasströmung bereits pulsierend erfolgt. Aufgrund der Druckstöße ergeben sich lokale Druckschwankungen und damit mehrdirektionale Gaspulsationen, womit die Partikel in die Partikelfalle geschwemmt und an den Porenwänden festgehalten werden.

Bei brennbaren Partikeln kann der Filter mit einem elektrischen Feld kombiniert werden, der zur Regenerierung des Filters herangezogen und bei Bedarf oder periodisch eingeschaltet wird. Dazu kann ein Elektrodenpaar mit mindestens einer Drahtelektrode verwendet werden, die auf ein sehr hohes Potential angelegt wird, so daß deren Koronaentladung fähig ist, Sauerstoff aus sauerstoffhaltigem Gas zu ionisieren und damit die in der Partikelfalle eingefangenen Partikel zu verbrennen. Das elektrische Feld bzw. das Potential wird nur kurzzeitig angelegt und wird nicht für den Filtervorgang, sondern für den Oxidationsprozeß eingesetzt.

Für diesen universell anwendbaren Filter sind Ausführungsformen geeignet, wie sie beispielsweise in den Figuren 1, 3 und 5 gezeigt sind, und wobei die Sprühelektroden 14, 141, 143, in erster Linie wegzudenken sind. Nach Fig. 1 tritt das Gas 10 über die Rohrleitung 11 in das Filtergehäuse ein, worin es die, makroskopisch gesehen, rohrförmige Partikelfalle 13 axial durchströmt. Das Gas 10 wird aufgrund von nicht dargestellten variablen Drosselstellen oder durch den Taktbetrieb einer Verbrennungsmaschine pulsierend durch den Filter strömen, so daß auch gegen die Partikelfalle 13 gerichtete Strömungen enthalten sind, aus denen die Partikel 12 in den offenen Kammern 15 der Partikelfalle eingefangen werden können. Mit der Länge des Partikelfallen-Rohres läßt sich der Abscheidegrad beeinflussen. Auch die Auslegung der Struktur und des Durchmessers der Partikelfalle hat Einfluß auf die Effizienz der Trennung der Partikel aus den Gasen. Diese Größen werden nach Anwendung und Formgestaltung des Filters experimentell ermittelt.

Auch die Verwendung von plattenförmigen Partikelfallen 131, wie sie in Fig. 3 gezeigt sind, sind für den universell verwendbaren Partikelfilter möglich. Plattenförmige Partikelfallen können auch quer zur Strömungsrichtung der Gase angeordnet sein, ohne jedoch den Strömungsquerschnitt auszufüllen, so daß ein Teilstrom die Partikelfalle, diese streifend, umströmen kann. In diesem Fall ist es zweckmäßig, mehrere Platten mit Abstand hintereinander anzuordnen und den die Platten umströmenden Teilstrom auch zwischen die Platten zu lenken.

Wichtig ist, daß ein Hauptgasstrom, der etwa den halben Gasdurchsatz oder mehr ausmacht, den Filterkörper bzw. die Partikelfalle umgeben kann, wobei ein Gasaustausch zwischen dem durch die Partikelfalle durchströmenden Anteil der Gase und dem Hauptgasstrom erfolgt. Es hat sich gezeigt, daß auf diese Weise die im Gas enthaltenen Partikel mechanisch einfangbar, d. h. vom Gas trennbar sind, aber ohne den Gasdurchsatz wesentlich zu beeinträchtigen.

Der durch die Partikelfalle 134, 133, führende Teilgasstrom 57 kann gemäß Fig. 5 so geführt werden, daß er erst nach dem Filter 50 in den Hauptgasstrom 56 zurückgeführt wird. Anderenfalls findet die Gasein- und -ausführung aus der Partikelfalle entlang der gesamten Partikelfalle statt.

Die Entsorgung der Partikelfallen wird je nach Anwendung erfolgen. Wo es möglich ist, wird die Partikelfalle oder der Filter ausgewechselt und gegebenenfalls mechanisch gereinigt. Bei brennbaren Partikeln können diese durch Wärmezufuhr verbrannt werden. Eine besonders einfache Art ist die Verwendung eines Ionisationsfeldes F innerhalb des Filters, wie es oben beschrieben wurde, das periodisch oder nach einer Meßgröße kurzzeitig eingeschaltet wird. Die im Feld F erzeugten und beschleunigten Ionen und Elektronen werden durch die in der Partikelfalle gesammelten Partikel gebremst, wobei die in Wärmeenergie umgewandelte kinetische Energie zur Oxidation der Partikel führt.

In Fig. 6 ist ein weiteres Ausführungsbeispiel gezeigt, bei dem im Filtergehäuse 60 mehrere Partikelfallen 136 aus Metallwolle, Lochplatten oder ähnlichem porösen Material nicht parallel, sondern schräg zur makroskopischen Strömungsrichtung angeordnet sind. Die plattenförmigen Partikelfallen 136 haben eine Größe, die kleiner ist als der Querschnitt des Filtergehäuses 60 und sind hintereinander mit Abstand angeordnet, derart, daß eine Teilströmung 62 des zu reinigenden Gases 106 die Partikelfallen streifend und umgebend vom Einlaßstutzen 64 bis zum Auslaßstutzen 65 durchströmen kann, während ein zweiter Teilstrom 61 die Partikelfallen 136 durchströmt. Nach jeder Partikelfalle 136 erfolgt eine Vermischung der Gase aus den beiden Teilströmen 61, 62, so daß sich keine definierten, getrennten Gasströme bilden. Die Orientierung der Platten kann zwischen der parallelen und der senkrechten Richtung gegenüber der Gasströmung sein.

## Ansprüche

1. Elektrostatischer Filter zum Reinigen von Gasen mit in einem Gehäuse angeordneten Elektroden, durch deren elektrostatisches Feld das Gas leitbar ist,
dadurch gekennzeichnet,
daß die als Abscheideelektrode bzw. Abscheideelektroden (13, 130, 131, 132, 133, 134, 141) vorgesehenen Elektroden strukturiert ausgebildet sind, derart, daß sie die daran abgeschiedenen Partikel (12) einzufangen vermögen.

2. Filter nach Anspruch 1, dadurch gekennzeichnet, daß die Abscheideelektrode (13, 130, 131, 132, 133, 134, 141) innerhalb des Filters (20, 30, 40, 50) zumindest einen Teil der Abgasführung bildet.

3. Filter nach Anspruch 1 oder 2, dadurch gekennzeichnet, daß die Abscheideelektrode Metallwolle (133) ist.

4. Filter nach Anspruch 1 oder 2, dadurch gekennzeichnet, daß die Abscheideelektrode aus einem Lochblech-Paket (131, 141) besteht.

5. Filter nach Anspruch 1 oder 2, dadurch gekennzeichnet, daß die Abscheideelektrode quer zur Strömungsrichtung der Gase unterschiedliche Bereiche aufweist, wobei der stromseitige Bereich so ausgebildet ist, daß darin nur eine im wesentlichen senkrecht zur Strömung gerichtete Bewegung der Partikel möglich ist, und daß der von der Strömung abgewandte Bereich zur Bildung des elektrischen Feldes beiträgt.

6. Filter nach Anspruch 5, dadurch gekennzeichnet, daß die Abscheideelektrode aus elektrisch leitendem Material besteht.

7. Filter nach Anspruch 5, dadurch gekennzeichnet, daß der strömungsseitige Bereich aus einem elektrisch isolierenden Material besteht.

8. Filter nach einem der Ansprüche 5 bis 7, dadurch gekennzeichnet, daß die aus elektrisch leitendem Material bestehende Komponente zumindest teilweise gleichzeitig als Heizdraht ausgebildet ist.

9. Filter nach Anspruch 1 oder 2, dadurch gekennzeichnet, daß die Abscheideelektrode aus mindestens einer Metallspirale (130) besteht.

10. Filter nach Anspruch 9, dadurch gekennzeichnet, daß die Metallspirale in Nuten einer temperaturbeständigen, elektrisch isolierenden Halterung angeordnet ist.

11. Filter nach einem der Ansprüche 1 bis 4, dadurch gekennzeichnet, daß die Abscheideelektrode eine flächig ausgebildete eigentliche Elektrode (132) ist und auf der dem Gasstrom (102) zugekehrten Seite der Elektrode ein Drahtnetz (41) aufweist.

12. Filter nach Anspruch 11, dadurch gekennzeichnet, daß eine Potentialdifferenz zwischen dem Drahtnetz (41) und der Elektrode (132) anliegt.

13. Filter nach einem der vorhergehenden Ansprüche, dadurch gekennzeichnet, daß ein Heizelement, insbesondere Heizdraht (22), durch die Abscheideelektrode (130) geführt ist.

14 Filter nach einem der Ansprüche 1 bis 12, dadurch gekennzeichnet, daß die Abscheideelektrode (132) von einer externen Heizquelle (44) beheizbar ist.

15. Filter nach Anspruch 13 oder 14, dadurch gekennzeichnet, daß die Heizquelle in Abhängigkeit der Partikelablagerung einschaltbar ausgebildet ist.

16. Filter nach Anspruch 13 oder 14, dadurch gekennzeichnet, daß die Heizquelle in Abhängigkeit der Abgastemperatur einschaltbar ausgebildet ist.

17 Filter nach einem der vorhergehenden Ansprüche, dadurch gekennzeichnet, daß die Abscheideelektrode zumindest teilweise katalytisch beschichtet ist.

18. Filter nach einem der vorhergehenden Ansprüche, dadurch gekennzeichnet, daß die Abscheideelektrode (133, 134) im Filtergehäuse (50) so angeordnet ist, daß ein Teilstrom des zu reinigenden Gasstromes (103) durch die Abscheideelektrode führbar ist.

19. Filter nach Anspruch 18, dadurch gekennzeichnet, daß am Filter (50) ein Rohr (53) vorgesehen ist, das den durch die Abscheideelektrode (133, 134) führenden Teilstrom (57) in den gereinigten Hauptstrom (56) führt.

20. Filter nach Anspruch 19, dadurch gekennzeichnet, daß das Rohr (53) in eine verengte Stelle (54) des Hauptgasrohres (114) in Strömungsrichtung nach dem Filter (50) einmündet.

21. Elektrostatischer Filter zum Trennen von brennbaren Partikeln aus sauerstoffhaltigen Gasen mit in einem Gehäuse angeordneten Elektroden, gekennzeichnet durch mindestens eine Sprühelektrode (14) mit starker Koronaentladung, mit der der im Gas enthaltene Sauerstoff ionisierbar ist und durch eine Ausbildung des elektrostatischen Filters (13, 14, 15), die es erlaubt, die brennbaren Partikel (12) mittels der Sauerstoff- und/oder Ozonionen zu oxidieren.

22. Filter nach Anspruch 21, dadurch gekennzeichnet, daß Mittel (13) vorgesehen sind, mit denen die Verweilzeit der Partikel im elektrischen Feld verlängerbar ist.

23. Filter nach Anspruch 22, dadurch gekennzeichnet, daß die Mittel Partikelfallen (13, 41, 130) sind.

24. Filter nach Anspruch 22 oder 23, dadurch gekennzeichnet, daß die Abscheideelektrode (13) strukturiert ausgebildet ist.

25. Filter nach einem der Ansprüche 21 bis 24, dadurch gekennzeichnet, daß die Sprühelektrode aus mindestens einem Draht (13) besteht, dessen Durchmesser kleiner als 0,15 mm ist.

26. Filter nach Anspruch 25, dadurch gekennzeichnet, daß entlang der Drahtelektrode (13) Spitzen, wie Whisker, Nadeln, vorgesehen sind.

27. Filter zum Reinigen von Gasen mit mindestens einer in einem Gehäuse angeordneten Partikelfalle zur Aufnahme der im Gas enthaltenen Partikel, dadurch gekennzeichnet, daß die Partikelfalle (13, 131, 134, 136) so angeordnet ist, daß sie vom Gasstrom (10, 101, 103, 106) im wesentlichen nur gestreift wird.

28. Filter nach Anspruch 27, dadurch gekennzeichnet, daß im Bereich der Partikelfalle (13, 131, 134, 135, 136) der Gasstrom (10, 101, 103) geteilt wird in einen Teilgasstrom (57, 61), der durch die Partikelfalle hindurchgeführt wird und in einen Teilgasstrom (56, 62), der an der Partikelfalle vorbeigeführt wird, wobei die Teilgasströme nach der Partikelfalle wieder vereinigt werden.

29. Filter nach Anspruch 27 oder 28, daß mehrere Partikelfallen (136) vorgesehen sind, und daß nach jeder Partikelfalle eine Zusammenführung von Teilströmen (61, 62) erfolgt.

30. Filter nach Anspruch 28, dadurch gekennzeichnet, daß der Gasstrom (103, 106) im Bereich der Partikelfalle (134, 136) in zwei Teilgasströme (56, 57, 60, 61) unterschiedlicher Volumen unterteilt wird.

31. Filter nach Anspruch 30, dadurch gekennzeichnet, daß der kleinere Teilgasstrom (57, 62) durch die Partikelfalle (134, 136) hindurchgeführt wird.

32. Filter nach Anspruch 27, dadurch gekennzeichnet, daß in Abgasströmungsrichtung hintereinander mehrere als Partikelfallen ausgebildete Filterplatten (136) mit Abstand zueinander angeordnet sind, derart, daß in den Platten oder an bzw. in peripheren Bereichen der Filterplatten Durchbrüche (63) vorgesehen sind, durch die ein Teilstrom (62) die Platten umgehend durchströmen kann.

33. Filter nach Anspruch 32, daß die Durchbrüche (63) von benachbarten Platten (136) versetzt angeordnet sind.

34. Filter nach einem der Ansprüche 27 bis 31, dadurch gekennzeichnet, daß die Partikelfalle (13, 134, 133) den Gasstrom (10, 103) rohrförmig umgibt.

35. Filter nach einem der Ansprüche 27 bis 34, dadurch gekennzeichnet, daß die Partikelfalle Wolle, Gestrick, Lochplattenpaket oder deren Kombination ist.

36. Filter nach einem der Ansprüche 27 bis 35, dadurch gekennzeichnet, daß Mittel vorgesehen sind, mit denen die zu reinigenden Gase in eine pulsierende Strömung versetzbar sind.

37. Filter nach einem der Ansprüche 27 bis 36, dadurch gekennzeichnet, daß der Partikelfalle (13) Mittel (14, 18) zugeordnet sind, mit denen die eingefangenen Partikel (12) umgewandelt bzw. verbrannt werden können.

38. Filter nach Anspruch 37, dadurch gekennzeichntet, daß der Partikelfalle (13) ein steuerbares, elektrisches Feld (F) hohen Potentials zugeordnet ist, mit dem Sauerstoff aus sauerstoffhaltigem Gas (10) ionisierbar ist.

39. Filter nach Anspruch 33, gekennzeichnet durch Mittel, mit denen der durch die Partikelfalle geführte Teilgasstrom nach dem Zufallsprinzip abgegrenzt wird.

40. Filter nach Anspruch 33, gekennzeichnet durch Mittel, mit denen der durch die Partikelfalle geführte Teilgasstrom nach dem Zufallsprinzip zwangsläufig abgegrenzt wird.

**Fig.1**

**Fig.2**

**Fig.4**

Fig.3

Fig.5

Fig.6

7.2462 b